# EUROPEAN PATENT APPLICATION

(11) **EP 4 628 477 A1**
(43) Date of publication of application: **08.10.2025**
(21) Application number: 24168304.4
(22) Date of filing: 03.04.2024
(51) Int. Cl.: C04B 41/45, C04B 41/00, C04B 41/52, C04B 41/70, C04B 41/71, E04C 2/06, C04B 28/02, C04B 20/10, C04B 111/00, C04B 111/80

(54) **METHOD OF MANUFACTURING A CEMENTITIOUS PRODUCT AND COATED CEMENTITIOUS PRODUCT**

(71) Applicant: Etex Services NV, 1880 Kapelle-op-den-Bos (BE)
(72) Inventor: LEEMANS, Raymond, 1860 Meise (BE)
(74) Representative: Etex Services NV - Etex IPSC

(57) **Abstract**

The method of manufacturing a cementitious product comprises the steps of: (1) providing an aqueous slurry comprising cement and fibers; (2) manufacturing a green sheet having a first surface using said aqueous slurry, wherein said green sheet having a predetermined color; (3) applying an aqueous composition of fibrous material to the first surface during or after the manufacture of the green sheet, (4) curing said green sheet, and (5) covering said fibrous material with a coating. The fibrous material may be chosen from the group of pigmented fibers, synthetic wood pulp and inorganic fibers. The aqueous composition may further comprise particulate inorganic material, for instance with an average diameter of 35-85 µm, and suitably comprising a calcium silicate material, such as xonotllite. The resulting fiber cement product is decorative due to the visible fibrous material.

## Description

### FIELD OF THE INVENTION

The invention relates to a method of manufacturing a fiber cement product comprising the steps of:
- providing an aqueous slurry comprising cement and fibers;
- manufacturing a green sheet having a first surface using said aqueous slurry, and
- Curing said green sheet.

The invention further relates to a cementitious product comprising a cement sheet.

### BACKGROUND OF THE INVENTION

Such a process is for instance described in WO2019/115615A1 of applicant. The aqueous slurry comprises therein pigmented fibers, i.e. fibers with pigment incorporated therein during the production of the fibers, for instance by extrusion. The pigmented fibers have a colour that is distinct from the cement sheet. Since the cement sheet is without coating that is fully opaque and therefore not light-transmissive, the pigmented fibers within the cement sheet - also referred to as the mass of the fiber cement product - are visible and enhance the decorative value of the fiber cement product. Alternatively, the aqueous slurry may comprise fibrils, also known as synthetic wood pulp. The fibrils may also be visible from an outside of the fiber cement product.

Both the pigmented fibers and the fibrils are additional to conventional fibers in fiber cement that are used for processing of the aqueous slurry and/or for reinforcement of the resulting fiber cement product. These additional fibers are based on polyethylene or polypropylene and therewith contribute to the organic content of the fiber cement product. This organic content is detrimental for the fire resistance of the fiber cement product. Moreover, the organic fibers hinder recycling of fiber cement material as fibers tend to hinder flowability of the recycled powder, and particularly when present in larger quantities. The fibrils seem to be a particular problem, as these are essentially partly splitted fibers with an octopus-like structure.

### SUMMARY OF THE INVENTION

It is therefore an object of the invention to provide an improved manufacturing process for a fiber cement product that includes the decorative feature of fibrous material being a visible part of the fiber cement sheet and still has better fire resistance and improved recyclability than known fiber cement products.

It is a further object of the invention to provide a fiber cement product having the decorative feature of fibrous material being a visible part of the fiber cement sheet and still has better fire resistance and improved recyclability than known fiber cement products.

According to a first aspect, the invention provides a method of manufacturing a fiber cement product comprising the steps of: (1) providing an aqueous slurry comprising cement and fibers; (2) manufacturing a green sheet having a first surface using said aqueous slurry, wherein said green sheet having a predetermined color; (3) applying an aqueous composition of fibrous material to the first surface during or after the manufacture of the green sheet, (4) curing said green sheet, and (5) covering said fibrous material with a coating.

According to a second aspect, the invention provides a coated fiber cement product comprising a cement sheet comprising fibers and cement and provided with a light-transmissive coating on a first surface of the cement sheet, wherein fibrous material is arranged on the first surface and covered by the coating.

It has been found in investigations leading to the present invention, that fibrous material may be applied with success to the surface of a cement sheet in the green phase. It was observed that the water or solution of the aqueous composition is drawn into the green cement. This brings the fibrous material to the first surface, where it will adsorb. A subsequent coating step results in coverage of the fibrous material, so that it will not move away from the first surface. It seems herein, that the fibrous material may get partially into the green cement, leading to fixation, especially during the curing step. Such explanation seems confirmed by the fact that the resulting product provides the illusory image that the fibrous material would be part of the cement sheet rather than being flowing in a coating on top of the cement sheet. Still, the amount of fibrous material is greatly reduced in comparison to said prior art methods. The reduction may be with more than 90%, preferably more than 95%, or even 98% or 99%.

In one embodiment, a pressing step is performed on the green cement sheet after the application of the fibrous material, but prior to curing. Such pressing step may contribute to partially incorporating the fibrous material into the green cement. With partial incorporation is referred to a situation wherein at least one terminal end of an individual fiber gets within the green cement. This leads to anchoring of such individual fiber. The pressing step may be performed as a separate step, or could be part of a conventional manufacturing process. For instance, a compression step to increase the density of the fiber cement sheet may simultaneously press said fibrous material to and into the green sheet. It is observed for sake of clarity that the extent of incorporation will be dependent on several factors, including dimensions of the fibrous material (diameter and length), concentration of fibrous material, time and location of the application (during or after the manufacture of the green sheet), and hydrophilicity of the fibrous material. However, in preliminary experiments, good results were obtained also with thick propylene fibers (with a diameter above 100 dtex), so that the process does not appear very sensitive. It is further observed that not all individual fibers of the fibrous material need to be anchored into the cement sheet.

According to one embodiment, the aqueous composition is applied during manufacture of the green sheet. This particularly is achieved by applying the aqueous composition onto a first cementitious layer transported on an endless belt towards an accumulator roll. In this manner the aqueous composition will get into contact with an outer surface of the accumulator roll. Subsequently, further cementitious layers will then be deposited onto this first layer. After deposition of a sufficient number of cementitious layers, a green sheet will be ready and may be removed from the accumulator roll. The fibrous material will be present at the first surface of the green sheet. While it is deemed sufficient and preferred that the aqueous composition is applied onto the first cementitious layer only, it is not excluded that an aqueous composition is also applied on more layers. An advantage of this embodiment is that the - partial - incorporation of the fibrous material into the green sheet can be achieved easily. Furthermore, it may be performed without time loss during manufacture.

As will be understood by those skilled in the art, manufacturing a green sheet while using an endless belt and an accumulator roll is common to manufacturing processes as the Hatschek process and the flow-on process. These manufacturing processes are especially in use for manufacture of fiber cement products. The addition of fibers to the aqueous slurry for fiber cement provides a reinforcement and allows adequate processing of the slurry in equipment needed for the Hatschek process or the flow-on process. Fiber cement products have the advantage of being stable, sufficiently strong, and dimensionally stable. Therefore, these products are used for exterior coverage, such as roofing and façade. Particularly for use in façades, the decorative quality of the fiber cement product is a very important criterion.

In one preferred implementation, the method further comprises a dewatering step, following the application of the aqueous composition. Due to the dispersion character of the aqueous composition, and the tendency of cement to attract water, dewatering may be performed easily. For instance, water may flow away through a belt on which the green sheet or layers therefore lies and/or is transported, and/or sidewise. Furthermore, underpressure may be applied to a bottom side of such belt or other porous band for active dewatering. A drying step may be performed after the dewatering step, in known manner, by increasing the temperature, by application of heat from a heat source such as an infrared lamp, and/or by bringing the green sheet in a drying chamber with reduced humidity level and/or increased temperature in comparison to atmospheric conditions.

According to another embodiment, the aqueous composition may be applied after manufacture of the green sheet. This may be performed while the green sheet is still present on the accumulator roll, or thereafter. An advantage of this embodiment is that the aqueous composition remains separate from the process water of the manufacturing process. Hence, any additive in the aqueous composition will not get mixed with the process water, where it might lead to unexpected effects. Another advantage of this embodiment is its simplicity of industrialization. All is needed is some spraying or coating tool.

The aqueous composition may be applied in various concentrations, in dependence of the desired effect as well as the location of application (i.e. during manufacture of the green sheet or thereafter). Preferably the aqueous composition is a diluted composition. Initial experiments were performed by spraying on the green sheet after its manufacture at a low concentration, i.e. less than 0.5% by weight. As a consequence, the spraying was performed more than once. It is however not excluded to increase the concentration of the aqueous composition. A preferred concentration is in the range of 0.1% to 10%, such as from 0.2% to 7% by weight of the dispersion.

The aqueous composition may be applied with any known means for applying a dispersion, including coating, spraying, spattering, brushing and the like. Spraying for instance occurs with an air atomizing spray gun, especially with a nozzle configured for the dispersed material.

In one embodiment, the fibrous material of the aqueous composition comprises pigmented fibers. These are fibers wherein pigment is incorporated during production of said fibers, for instance by means of extrusion. Such fibers may have a diameter in the range of 30 to 150 dtex, for instance 50 to 120 dtex, such as 60 to 100 dtex. A lower limit to the diameter may reside in dispersability. A higher limit to the diameter resides in the incorporation and adequate coverage of the fibers in the coating. Such pigmented fibers are clearly visible and may be combined with coatings with a relatively high hiding powder.

In another embodiment, the fibrous material of the aqueous composition comprises synthetic wood pulp. Such material, also referred to as fibrids or fibrils, constitutes a highly refined form of fibers, wherein especially as part of the production process the fibers are splitted into tiny structures. It is not excluded that such synthetic wood pulp comprises inorganic material, such as pigment or calcium carbonate, as described in the non-prepublished application EP22215296.9 in the name of Applicant, which is herein included by reference. Such synthetic wood pulp has a pronounced fibrous structure, that is deemed to be aesthetically beautiful.

In again a further embodiment, the fibrous material of the aqueous composition comprises inorganic fibers. Examples of such inorganic fibers include basalt fibers, glass fibers, such as alkaline stable glass fibers, silica fibers, silicate fibers, aluminosilicate fibers. Silica fibers are among the inorganic fibers with a white or whitish color. Use of inorganic fibers is deemed to provide the advantage of good adhesion to the cement sheet. Additionally, inorganic fibers do not have a negative impact on fire resistance. However, this effect is comparatively small due to the low amount of fibers used in the method of the invention. For sake of clarity it is observed that the fibrous material may comprise more than one type of fiber as specified hereinabove, or even all three types.

Furthermore, the aqueous composition may comprise additives in low quantities to ensure adequate processing of the aqueous composition. Examples of such additives are antifoam agents, surfactants, thickening agents, biocides and the like. Preferably, such additives are present in low quantities, for instance of at most 2% per additive, preferably at most 1% as based on the total weight of the aqueous composition. The aqueous composition may further comprise a cementitious material as an ingredient, though this is not deemed necessary. Examples of such cementitious material include silica materials such as amorphous silica and cement materials, such as Portland cement and other conventional additives such as limestone and/or trass. Such cementitious material would be preferably present in an amount of at most 50% by weight of the total weight of the aqueous composition. The particle size of the cementitious material is preferably configured to enable adequate application without clogging. The idea behind this further embodiment is to stimulate partial incorporation and anchoring of the fibrous material into the green cement sheet by adding some ingredients that may form a surficial cement layer.

In one embodiment, the aqueous composition furthermore comprises a binder, which is preferably present in an amount of less than 25 wt.%, preferably less than 15 wt.%, more preferably less than 5 wt.%, more preferably between 0 and 2 wt.% based on the total weight of particles in the dispersion. The binder can comprise mineral and / or polymer binders. The binder preferably comprises not more than 40 wt.% of polymer binder over the total weight of binders (polymer + mineral), preferably not more than 25 wt.%, more preferably not more than 10 wt.%. In an embodiment, the binder comprises no polymer.

In an alternative embodiment, the aqueous composition comprises no binder. The absence of a polymer binder is preferably, so as to withstand autoclave curing. Additionally, the absence of a binder provides more freedom in application of the aqueous composition, as there is no risk of contamination of process water used for the manufacture of the green sheet. However, in case that the aqueous composition is applied after manufacture of the green sheet, such risk of contamination is reduced and/or may be arranged to be absent. Suitable polymer binders will be aqueous binders, such as acrylate binders. Such a binder is well-known and typically based on emulsion polymerisation. Polymer binders may further include ethylenically unsaturated double bonds, so as to achieve curing.

In again a further embodiment, the aqueous composition further comprises a particulate inorganic material. It has been found that such particulate inorganic material may adhere to the surface and get into the surface of the green cement sheet. This leads to an effect of dots, that jointly may provide a softening of the color of the cement sheet. The visual effect of the particulate inorganic material is deemed complementary to that of the fibrous material. The particulate inorganic material is preferably a material with a white or whitish color, such as titanium oxide, calcium carbonate, silica, diatomaceous earth, alumina, calcium silicate, vermiculite, magnesium silicate such as talc, aluminium silicates such as mica, barium sulfate, calcium sulfate such as gypsum. Preferred are crystalline materials. Combination of such materials could also be used. Silicate materials are herein preferred, and especially calcium silicate materials. In one implementation, the particles in the aqueous coating composition preferably have an average size comprised between 20 and 100 µm, such as between 35 and 85 µm. This is deemed to be an adequate size to achieve the pattern of dots. The average size herein refers to the d50 median as measured by laser diffraction.

Notwithstanding a preference for white or whitish inorganic material, it is not excluded that the particulate inorganic material is chosen to have a different color, such as black, brown, red or beige. Materials hereof are known per se. Examples of black particulate inorganic materials are for instance black iron oxide and carbon black. The addition of black particulate inorganic material in the shading layer is for instance deemed advantageous in case that the cement sheet is white or light-colored.

A preferred example of a particulate inorganic material is calcium silicate. Several crystalline forms of calcium silicate exist, depending on the ratio between calcium and silicon, as well as the amount of crystal water (hydrates), such as tobermorite, xonotlite, wollastonite. Hydrous calcium silicates may be prepared synthetically, allowing that properties are constant. These hydrous calcium silicates are known to give good brightness and comparatively low oil absorption. They are known as filler (or extender pigment) in paints, such as aqueous based paints known as latex. Additionally, these calcium silicate materials are highly compatible with cement, which also includes forms of calcium silicates as the effective bonding species in the cement. This high compatibility facilitates recycling. It further enables that the particles may get bonded to the cement. The latter implies that the incorporation of the particles at or in the surface will not be detrimental for the properties of the product, such as bending strength, water absorption, crack resistance and the like. Alternative silicate based materials, such as perlite and phyllosilicate materials, such as for instance vermiculite, are not excluded, and may be provided in available forms, such as exfoliated vermiculite and expanded perlite.

A preferred form of calcium silicate is xonotlite, which is a crystalline form with formula Ca₆Si₆O₁₇(OH)₂, or more generically Ca(SiO3).xH2O. This material is commercially available and has a mean particle size in a range that is large enough for creating visual contrast, especially 10 µm or more, such as between between 35 and 85 µm. An even more preferred form hereof is a synthetic version hereof that comprises an inner porous structure in addition to a crystalline skin. Such a material is commercially available from Promat International under the trade name Promaxon^{®}. While referring here to xonotlite, it is not excluded that xonotlite particles may comprise other calcium silicate forms in addition to xonotlite. The xonotlite with an inner porous structure has been found to have good optical properties, such that it could be used as a pigment like TiO2. In fact, crystalline xonotlite is needle shaped. Xonotlite particles comprise such needles, at least in their inner porous structure. When applying xonotlite particles, it is not excluded that at least part thereof will break open during the preparation and/or processing of the aqueous composition thereof.

With the term "crystalline skin" it is described that the external layer is predominantly composed of crystals. Predominantly is herein at least 80% by weight, preferably at least 90% by weight or even at least 95% by weight or at least 97% by weight, at least 98% by weight, at least 99% by weight. As the skin is composed of individual crystals, pores may be present in between of the crystals. Preferably the crystals may be needle-shaped or plate-shaped, and the crystals may be entangled defining said pores. According to a preferred implementation, the crystals of the crystalline skin have an average size smaller than the crystals in in the inner porous structure. Furthermore, the pores in the crystalline skin may have an average size smaller than the inner pores.

The use of xonotlite for its fire-resistant properties as described e.g., in US4612344 and WO99/46215. Promaxon^{®}, is a commercial form of synthetic xonotlite particles. Herein, crystals of xonotlite are provided as agglomerates in a spherical substance with a mean diameter between 40 and 150 microns and with an internal part and an external layer. The crystals are loosely entangled in the internal part, whereas the crystals are more tightly entangled in the external layer. It is commercialized as a friction extender in brakepads and linings, and as a thixotropic agent in paints and coatings, as a parting agent for granulates, in dry liquid systems, flame retardant and drip suppressant in thermoplastics.

In a preferred embodiment, the synthetic xonotlite having an inner porous structure and an external layer in the form of a crystalline skin has an average particle size in the range of 5 to 100 µm, such as from 10 to 50 µm. Although the synthetic xonotlite particles are typically bigger than 5 µm, it is not excluded that the particles get broken and or that a size reduction treatment is performed upon generation of the aqueous dispersion. However, it is deemed an advantage of the aqueous dispersion that the minimum size is not too small, so as to facilitate effective removal of water after the application thereof.

In again a further embodiment, pigment of different color than white may be added into the shading layer to obtain a desired coloring. Preferably, red and / or yellow pigments or dyes are used. Pigments are herein particularly preferred as these have known alkaline resistance needed to withstand the pH of fiber cement. In earlier experiments it was found that the combination of calcium silicate material, and especially synthetic xonotlite with pigment in a mutual mass ratio of 5:1 and 20:1, such as between 7:1 and 15:1 led to a uniform coloring. The pigment used therein were for instance yellow and red in desired mutual ratios to obtain a predefined color.

In one further and important embodiment, the aqueous dispersion as used in the method of the invention further comprises a hydrophobation agent. Preferred hydrophobation agents are based on alkyl- and alkoxy-silane technology and known per se in the art. The hydrophobation agent may be monomeric, oligomeric or polymeric in nature. Specific examples are for instance provided in Eur. Coatings. J. 3/2015, pp. 102-105. A hydrophobation agent is a known additive to fiber cement, either as an additive within the aqueous slurry from which the green sheet is formed, or as an additive applied onto a fiber cement product after curing. Hydrophobation is for instance applied to reduce inflow of water, and therewith reduce occurrence of efflorescence. The addition of a hydrophobation agent to the aqueous dispersion is deemed an efficient manner to achieve a uniform application thereof. Moreover, it is furthermore feasible to apply the aqueous dispersion, and hence the hydrophobation agent, also to side edges.

In one embodiment of the invention, the coating step occurs after the curing. This is deemed the preferred option, as it allows use of conventional organic coatings. Typically, an organic coating system on a fiber cement sheet comprises a primer layer, and one or more coating layers. Coating techniques are known per se. The primer may for instance be a dried layer. A top coating is preferably curable thermally and/or by UV-radiation. In order to ensure that the fibrous material is visible through the one or more coating layers, the coating layers are suitably light-transmissive. This means that the coating layers have a so-called hiding power of less than 100% and preferably significantly less, such as less than 80% or even less than 50%. In other words, the coating is not fully opaque. Preferably use is made of translucent coating layers and/or transparent coating layers. An advantageous implementation of a translucent coating layer is a coating layer with a comparatively low pigment volume concentration (PVC), such as in the range of 0.01% to 8% and preferably 0.05% to 3%. The pigment in such translucent coating layer is suitably one or more conventional pigments, leading to both scattering and absorption of light. A transparent coating layer may be a so-called clear coat, which is free of pigment. Another implementation of a transparent coating layer is a coating layer that comprises a transparent pigment, which is known as a nanoscale pigment such that the pigment has strong light absorption but weak scattering. The nanoscale transparent pigment suitably has an average particle size of less than 50 nm, preferably even 25 nm or less, as opposed to conventional pigments with a size in the range of 150-500 nm. Coatings configured for use in fiber cement products are for instance known from EP2036871A1, EP3307696A1, EP1914215, EP2764031.

In another embodiment of the invention, the coating step may occur before curing. This may be feasible for glass- or mineral coatings, which however may alternatively be applied after curing. One example hereof is a geopolymer coating as specified in EP3724149.

In a further embodiment of the method of the invention, the green sheet is compressed after application of the aqueous dispersion, and preferably after dewatering and/or drying of the green sheet with the shading layer. Compressing of cementitious products, such as fiber cement products, is known per se, and may be achieved by applying a pressure that is for instance in the range of 15 to 30 MPa, for instance 20 to 30 MPa. It results in a product with a higher density and improved properties, such as enhanced strength and reduced water absorption. The compression step will lead to further dewatering of the shading layer and the cement sheet. Compressed fiber cement products are highly suitable for façade applications.

The curing step in the method of the invention may be any type of curing, such as air-curing step, autoclave-curing step and carbonation curing step (i.e. with CO2). Conditions for these curing steps are known per se to the skilled person in the art. Furthermore, as known, the curing step may be preceded by any pre-curing treatment, which is for instance a curing step at atmospheric conditions during 6-12 hours at a temperature of 20-80 °C, for instance 40-70 °C.

It is observed for sake of clarity and completeness, that any of the above mentioned embodiments applies to all aspects of the invention (both the method and the product). The same applies to any embodiment specified in the dependent claims or in the following.

### BRIEF DESCRIPTION OF THE FIGURES

For a more complete understanding of the nature of the present invention, reference is made to the following detailed description taken in conjunction with the accompanying drawings in which:
Figures 1(a) to 1(c): show various coating apparatuses for applying a coating onto a main surface of a green sheet according to the present invention.
Fig. 2A-2C show a series of pictures of fiber cement boards obtained with the invention

### DETAILED DESCRIPTION OF THE INVENTION

The present invention concerns a method for providing a fiber cement product, and to a resulting fiber cement product. As known per se to the skilled person, fiber cement products are manufactured in a method comprising a first step of providing an aqueous slurry comprising cement. As a second step, a green sheet is manufactured using said aqueous slurry. Thereafter, the green sheet is cured, typically by autoclave-curing or by air-curing. After the curing, the sheet may be coated, and furthermore may be treated mechanically, for instance to generate holes, cavities and/or edge patterns (such as grooves) for assembly and fastening. Between green sheet manufacturing and curing, treatments may be performed on the green sheet to modify its shape, its surface and/or its properties. A typical shape modification is corrugation to form corrugated sheets. A typical surface modification is embossing or engraving. A typical property modification is a compressing step, for instance with a pressure in the range of 20MPa to 30MPa. This increases the density of the green sheet, which will improve stability in humid atmospheres, as well as mechanical properties. Stability in humid atmospheres is typically tested by means of a dimensional stability test during artificial freezing and thawing test. Water absorption is also measured, for instance by means of a Karsten test. Mechanical properties include the compressive strength, expressed as the SMOR and the elastic modulus. According to the present invention, a surface modification of the green sheet is performed in that fibrous material is applied. From a distance, after curing the green sheet, the presence of fibrous material in and at the surface of the green sheet provides the illusionary effect that the fibrous material would be present in the cement sheet rather than being applied on top of the green sheet. As will be elucidated hereinafter, the fibrous material will be applied in the form of an aqueous composition. Thus aqueous composition, typically a dispersion may additionally comprise inorganic particulate material. Furthermore, the surface modification may be applied after manufacture of the green sheet, but alternatively during manufacture of the green sheet.

### Manufacturing a fiber cement green sheet and applying the aqueous composition

The manufacture of fiber cement products typically starts from an aqueous slurry comprising cement in addition to fibers. Cement is typically Portland cement, but may alternatively be another type of cement. Fibers may be cellulose fibers, synthetic fibers and inorganic fibers such as basalt fibers or glass fibers. In case of autoclave cured cement products, silica is added so as to achieve a reaction between silica and cement during autoclaving. Therefore, in autoclave cured products, the content of cement is typically 25-50% by weight and the content of silica is typically 25-50% by weight, as based on the total dry weight of the slurry. In case of air-cured fiber cement products, the slurry typically comprises at least 60% and preferably at least 70% by weight of cement, as based on the total dry weight of the slurry. Further additives may be provided to the aqueous slurry, which are known per se to the skilled person. Examples include limestone, chalk, quick lime, slaked or hydrated lime, ground sand, silica sand flour, quartz floor, amorphous silica, condensed silica fume, microsilica, metakaolin, wollastonite, mica, perlite, vermiculite, aluminium trihydroxide (ATH), pigments, antifoaming agent, flocculants and the like. The aqueous slurry may further contain recycled fiber cement material.

The manufacturing of the green sheet from an aqueous slurry may be performed by any method known in the art, such as the Magnani process, a flow-on process, the Hatschek process or a casting process. Flow-on and Hatschek are the preferred manufacturing processes, and Hatschek process is particularly preferred. The manufacturing process of flow-on and Hatschek comprise the steps of (1) the application of an aqueous slurry or films thereof onto an endless belt, (2) the transport of said aqueous slurry or films thereof on the endless belt, while performing at least one dewatering step, therewith forming a - wet - layer, (3) the transfer of said - wet - layer to an accumulator roll, also known as forming drum, resulting in stack of a plurality of layers to form a green sheet, and (4) the removal of the green sheet from the accumulator roll. This removal may occur by cutting through the green sheet on the accumulator roll, such that the green sheet can be unwounded from the accumulator roll in a controlled manner.

In the Hatschek process, the first step of applying the aqueous slurry or films thereof on the belt makes use of rotating sieves going through a vat of the aqueous slurry. Several films are disposed on top of each other on the belt, so as to form a layer. The application step will thus comprise (i) building a fiber cement film on a sieve, which sieve rotates so as to be in contact with a fiber cement slurry in a vat; and (ii) transferring the fiber cement film from the sieve to the felt transport belt. The resulting fiber cement layer is also known as a "Hatschek fiber cement layer" or a "Hatschek layer" as interchangeably used herein refers. Hence, series of thin films are produced on the one or more sieves from the Hatschek machine and subsequently superimposed and transferred from the one or more sieves to the transport belt, resulting in one or more uncured Hatschek fiber cement layers after accumulation on an accumulation roll. A "fiber cement (thin) film" typically has a thickness of between about 0.01 mm and about 0.9 mm, such as in particular between about 0.05 mm and about 0.5 mm, such as between about 0.1 mm and about 0.4 mm, such as about 0.3 mm. (i.e. one thin film of fiber cement also called a mono-layer, that is applied onto the felt transport belt by a sieve from a vat of the Hatschek process). The Hatschek layer comprises two or more superimposed fiber cement films by two or more sieves from a vat of the Hatschek process (i.e. two or more superimposed monolayers of fiber cement applied onto the felt transport belt). The number of superimposed fiber films depends on the particular configuration of the Hatschek section and especially the number of sieves.

In the flow-on process, the first step of applying the aqueous slurry on the belt occurs as such. This results in a thicker fiber cement layer instead of a superimposed series of films.

Due to the unwounding process from the accumulator roll, the bottom side of last fiber cement layer on the belt (which may be the last portion of a continuous layer) will normally form the bottom side of the fiber cement sheet. The top side of the first fiber cement layer on the belt will be arranged adjacent the surface of the accumulator roll and will normally form the top side of the fiber cement sheet. Obviously, top and bottom side of the fiber cement sheet can be reversed.

Therefore, in order to arrange fibrous material and optionally particulate material so as to be present at and at least a portion thereof in the - first, main - surface of the fiber cement sheet, there are three options of applying an aqueous composition of said fibrous material:
(1) The application of the aqueous composition on top of the first fiber cement layer during the transport thereof on the endless belt;
(2) The application of the aqueous composition on top of the last fiber cement layer while being present on the accumulator roll;
(3) The application of the aqueous composition on the first surface of the fiber cement sheet after unwounding from the accumulator roll. In this option, the aqueous composition may be applied on more surfaces that the first surface only.

For sake of clarity, it is added that the aqueous composition may be applied by any suitable process, such as spraying, spattering, brushing and even coating. It is feasible that the aqueous composition is applied in in one application step or in more than one application step, such as spraying or spattering the aqueous composition twice onto the first layer on the belt, for instance at mutually different locations. The use of a combination of said three application options is not excluded. Moreover, it may well be that the aqueous composition as applied in different steps are mutually different, for instance with respect to concentration, particle size of the particulate material, and/or composition. Furthermore, where the aqueous composition is applied on top of the first fiber cement layer during transport on the belt, it is not excluded that the aqueous composition is also applied on top of a further (portion) of the fiber cement layer.

It is deemed preferable that a pressing step is performed after application of the aqueous composition. This may contribute to the adhesion of the fibrous material to the first surface of the cement sheet. This pressing step is particularly preferred in case that the aqueous composition additionally comprises particulate inorganic material. Where the aqueous composition is applied onto the first fiber cement layer on the belt, such pressing will be performed in the course of wounding and stacking the fiber cement on the accumulator roll. Where the aqueous composition is applied later on in the process, the pressing may be performed in the course of a compression step to increase the density of the sheet. Hence, in both cases, such pressing occurs when performing specific process steps. When still needed or desired, a separate pressing step may be performed, for instance by applying a roller over the first surface of the fiber cement sheet, or guiding the fiber cement sheet below a roller pressing on the first surface thereof.

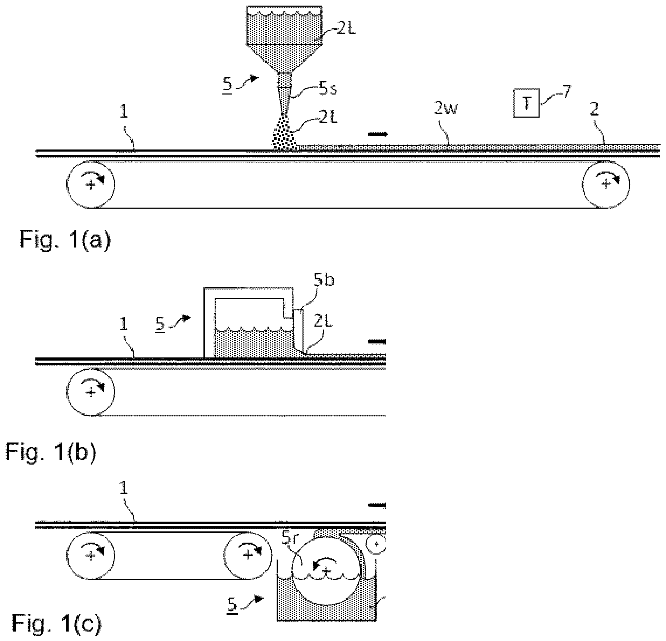

**Figures 1(a) to 1(c)** show three non exhaustive examples of application methods for the aqueous composition. As shown in **Figure 1(a)****,** the aqueous coating composition can be sprayed or poured onto a substrate 1, such as the green sheet or onto the first layer thereof. This results in a wet layer (2w), that thereafter is dewatered to form the shading layer (2), preferably involving pressing (not shown). This technique is simple, robust, and reliable.

As shown in **Figure 1(b)****,** the aqueous composition can be applied with a doctor blade (5b) which controls the thickness of the wet layer (2w) applied onto the substrate 1. **Figure 1(c)** shows application of the aqueous dispersion by roller coating. The coating techniques illustrated in **Figures 1(b) and 1(c)** are more suitable for application on the manufactured green sheet than on the first layer thereof during manufacture of the green sheet. The aqueous composition can also be applied by brush painting, by dipping, or by electrostatic coating.

The aqueous composition may be applied (semi-) continuously or intermittently, i.e. in accordance with a predefined application pattern as a function of time, as illustrated in **Figures 1(a) to 1(c)****.** The substrate (1) herein preferably travels on a conveyor. The aqueous composition (2L) is stored in a tank (5) with dispensing means for transferring a desired amount of aqueous composition (2L) onto the substrate to form a wet layer (2w), as this travels through the dispensing means. The aqueous composition may be stirred during storage and/or prior to application, so as to avoid settling of the fibrous material. As shown in Figures 1(a) to 1(c) and discussed supra, the dispensing means can be a spraying head (5s) or pouring head, or a tank (5) partly opened with a doctor blade (5b), or a roller (5r) partly immersed in the aqueous dispersion (2L). If the aqueous composition is applied to the green sheet after its manufacture (and especially after unwounding from the accumulator roll), a setting station (7) may be present downstream of the applicator for setting the wet layer (2w) to form the dry layer (2). The setting station (7) can comprise an oven or dryer to evaporate the water and other volatiles from the wet layer (2w). In case the aqueous dispersion comprises a binder, the setting station (7) can be configured for crosslinking the binder, with a source of light (IR, visible, UV) and the like.

### EXAMPLE 1 - application of an aqueous composition of fibrous material

Tests were performed, wherein synthetic wood pulp was taken out of the mass and replaced with fibrous material that was applied onto the green sheet. Table 1 shows compositions of the aqueous slurry used for manufacturing the green sheets, wherein the reference example comprises synthetic wood pulp. Table 2 shows compositions of the aqueous dispersion applied onto the green sheet for obtaining the shading layer.

**Table 1**

| | Test compositions | |
|---|---|---|
| | REF | 1-3 |
| Portland cement | 84% | 85% |
| Cellulose fibers | 3% | 4% |
| Polyvinyl alcohol fibers | 2% | 2% |
| Synthetic wood pulp | 2% | 0% |
| Pigment | 4% | 4% |
| Trass | 5% | 5% |

Table 1- aqueous slurry compositions. All values in % based on dry weight. Synthetic wood pulp was a composition of polyolefin fibrils obtained from Mitsui under the trade name SWP^{™}. Pigment was black iron oxide pigment (Fe₃O₄).

**Table 2**

| | Test compositions | | | |
|---|---|---|---|---|
| | REF | 1 | 2 | 3 |
| Xonotlite | - | - | 0.2% | 0.2% |
| Synthetic wood pulp | - | 2.0% | - | 2.0% |
| Pigmented polypropylene fiber | - | - | 0.4% | - |
| Water | - | 98.0% | 99.2% | 97.8% |

Table 2 - aqueous compositions. All values in weight% based on total weight. The synthetic wood pulp is by itself an aqueous dispersion with a consistency of 4.3% by weight. The effective dry amount is thus less than 0.1%. The synthetic wood pulp is a polyethylene fibrilic composition obtained from Mitsui. The pigmented polypropylene fibers had a diameter of 110 dtex and were milled to an average length of between 1.0 and 2.0 mm, and a length distribution from 0.2 mm to 3.0 mm. The xonotlite material was synthetic xonotlite as obtained from Promat International NV under the tradename Promaxon D, having a core-shell structure as explained hereinabove and with an average diameter of approximately 50 µm. For sake of stability of the aqueous dispersion, it further included some droplets of surfactant for fiber material (a fatty acid polyglycol ether and ester mixture), and 1ml (1% by volume) of antifoam agent for concrete, being a fatty acid alcohol alkoxylate.

The green sheets were prepared using the Hatschek process on a pilot line in known manner. The aqueous dispersion was applied onto the green sheet after removal of the green sheet from the accumulator roll. In the present example, the aqueous dispersion was applied by spraying. Use was made of an air atomizing spray gun with a nozzle of 2.0 mm. The spraying was applied in lanes so as to cover the entire surface of the green sheet. Spraying was repeated five times. It is observed that the water from the dispersion quickly diffuses into the green sheet, while the particulate and fibrous material remained on top of the green sheet. Subsequently, the plates were pressed in a stack press using a pressure of 230 kg/cm². This was followed by air curing and application of a hydrophobic agent and transparent coating in the manner specified in example 1 of EP2036871A1, which is herein included by reference.

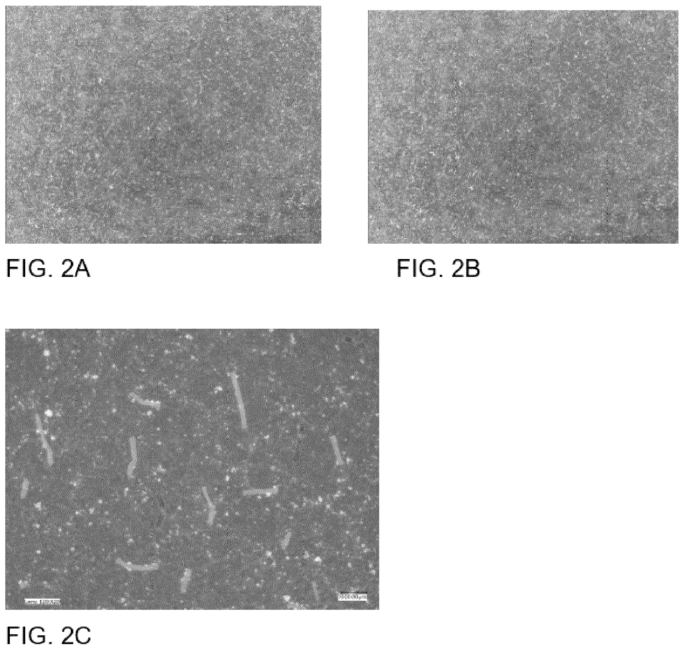

Fig. 2A-2C show a series of pictures of resulting fiber cement boards. Fig 2A and Fig. 2B are images of the boards produced in accordance with Examples 2 and 3 respectively. These pictures were again made before coating of the sheet. It is apparent that the use of the pigmented fibers of Example 2 renders the fibrous material more visible or even dominant. However, any coating layer applied subsequently may reduce the effect, as the coating need not be fully transparent, but merely translucent. Fig. 2C shows a microscope image of the board of Example 2 after coating. The pigmented fibers are herein visible as line segments, and the xonotlite particles as dots. The indication on the bottom right hand side specifies the length of 1 mm (1000 µm) in the image.

It was visible that the particles of inorganic material - xonotlite particles in the present example - were pressed into the green sheet. The particles remained visible as dots. None of the particles came out of the surface of the fiber cement sheet, either before curing or after curing. The particles were fully covered by the coating applied subsequently. The dots remained visible after the coating and could be distinguished from the background (with the eye and by microscope). Jointly, the dots and any fibrous material provided a shading layer, giving rise to a softening of the color of the fiber cement sheet.

In Example 2, it was visible, when looking carefully, that a few of the pigmented fibers came out of the coating, leaving a narrow groove behind. This however applied only to a minority of the pigmented fibers, and did not have an impact on the overall look of the coated fiber cement sheet. The same artefact was not seen in test samples of Example 3. Therefore, this minor artefact can be solved - if so desired - by using thinner pigmented fibers than 110 dtex or applying the coating in a larger thickness.

Color measurements were performed on the coated fiber cement sheet obtained in Example 1 and Example 2. The color measurements were performed with a Byk-Gardner spectro-guide and an illuminant D65 and Observer 10°. There was a delay between coating and color measurement of at least one week. The color measurements were done on three different locations on the boards, each measurement being an average of three values. Table 6 shows the results. Table 7 provides an average of the three values of Table 6, as well as the difference between the two samples.

**Table 6 - color measurements**

| | L* | a* | b* |
|---|---|---|---|
| Example 1 | 29.18 | 0.59 | 0.01 |
| | 29.39 | 0.55 | 0.01 |
| | 29.05 | 0.60 | 0.16 |
| Example 2 | 31.38 | 0.53 | 0.26 |
| | 31.21 | 0.54 | 0.31 |
| | 30.92 | 0.50 | 0.33 |

**Table 7 - color measurements, calculated average and change**

| | L* | a* | b* |
|---|---|---|---|
| Example 1-average (1) | 29.2 | 0.58 | 0.06 |
| Example 2 - average (2) | 31.2 | 0.52 | 0.30 |
| Change | 2.0 | 0.06 | 0.24 |

It is apparent from Table 6 and 7 that the tested board including xonotlite (Example 2) had a higher value of L*. The value for a* was virtually the same, wherein the value for b* was slightly higher. As known, the values for a* and b* depend largely on the presence of pigments, whereas the value of L* indicates the clarity (light or dark) of the sample, on a scale from 0 representing black to 100 representing pure white.

## Claims

1. A method of manufacturing a fiber cement product comprising the steps of:
- Providing an aqueous slurry comprising cement and fibers;
- Manufacturing a green sheet having a first surface using said aqueous slurry, wherein said green sheet having a predetermined color;
- Applying an aqueous composition of fibrous material to the first surface during or after the manufacture of the green sheet,
- Curing said green sheet, and
- Covering said fibrous material with a coating.

2. The method as claimed in claim 1, wherein the aqueous composition of fibrous material is applied onto a previously formed green sheet.

3. The method as claimed in claim 1, wherein the manufacturing of the green sheet comprises forming a plurality of layers and laminating said layers on an accumulator roll, wherein the aqueous composition of fibrous material is applied on a first layer prior to arranging said first layer on the accumulator roll, so that said fibrous material faces an external surface of the accumulator roll.

4. The method as claimed in any of the preceding claims 1-3, wherein the fibrous material of the aqueous composition comprises pigmented fibers.

5. The method as claimed in any of the claims 1-4, wherein the fibrous material of the aqueous composition comprises synthetic wood pulp.

6. The method as claimed in any of the preceding claims 1-5, wherein the fibrous material of the aqueous composition comprises inorganic fibers.

7. The method as claimed in any of the preceding claims, wherein the aqueous composition is a diluted composition of fibrous material.

8. The method as claimed in any of the preceding claims, wherein the aqueous composition further comprises a particulate silicate material, preferably a particulate calcium silicate material.

9. The method as claimed in claim 8, wherein said calcium silicate material comprises xonotlite, preferably a synthetic xonotlite.

10. The method as claimed in claim 8 or 9, wherein said particulate calcium silicate material has a mean particle size (d50) as defined by laser diffraction in the range of 30-100 µm.

11. The method as claimed in any of the preceding claims 1-9, wherein the coating is applied onto the cured sheet.

12. A coated fiber cement product comprising a cement sheet comprising fibers and cement and provided with a light-transmissive coating on a first surface of the cement sheet, wherein fibrous material is arranged on the first surface and covered by the coating.

13. The coated fiber cement product as claimed in claim 12, obtainable with the method according to any of the claims 1-11.

14. The coated fiber cement product as claimed in claim 12 or 13, further comprising particulate inorganic material at the first surface, wherein at least part of the particulate inorganic material is pressed into the cement sheet.

15. The coated fiber cement product as claimed in claims 12-14, wherein said light-transmissive coating is transparent or translucent.
